# EUROPEAN PATENT APPLICATION

(11) **EP 1 796 378 A1**
(43) Date of publication of application: **13.06.2007**
(21) Application number: 06016524.8
(22) Date of filing: 08.08.2006
(51) Int. Cl.: H04N 5/44

(54) **Method of displaying television receiver input signal according to time-shift function and television receiver using the same**

(30) Priority: 12.12.2005 KR 20050121606
(71) Applicant: LG Electronics Inc., Yongdungpo-Gu Seoul 150-010 (KR)
(72) Inventor: Hong, Kyung Dug, Dong-gu Daegu (KR)
(74) Representative: Katérle, Axel

(57) **Abstract**

In reproducing a broadcast signal according to a time-shift function, a method of displaying a television receiver input signal according to the time-shift function, and a television receiver using the same, enables a visual confirmation of a progress status of a real-time broadcast signal. The television receiver receives in real time an input signal of one channel and includes a personal video recorder enabling a time-shift function, the personal video recorder having a storage medium for storing the real-time-received input signal; a user interface for inputting, according to a user selection, a display mode selection signal based on the time-shift function; a display module for displaying on a screen the real-time input signal and an input signal stored in the personal video recorder according to a display mode; and a controller for determining whether a user requests the stored input signal to be output according to a time-shift function and for controlling the personal video recorder to output, if it is determined that the user requests output of the stored input signal according to the time-shift function, the stored input signal on a first area of the screen and the real-time-received input signal on a second area of the screen according to the display mode selection signal input by the user selection.

## Description

This application claims the benefit of Korean Patent Application No. 10-2005-0121606, filed on December 12, 2005, which is hereby incorporated by reference as if fully set forth herein.

### BACKGROUND OF THE INVENTION

### Field of the Invention

The present invention relates to television receivers and, in particular, to a method of displaying a television receiver input signal according to a time-shift function and a television receiver using the same.

### Discussion of the Related Art

A television receiver provided with a personal video recorder includes a storage medium such as a hard disc drive for recording (storing) and reproducing video signals including their associated audio components. The stored signals are digital video signals that are input to the television receiver and may be broadcast signals received from a broadcast station or other signals such as those supplied from a peripheral device connected to the television receiver. In any case, the input signals are encoded for storage in a transport stream format.

For instance, a television broadcast receiver provided with a personal video recorder (PVR) employs a hard disc drive as a storage medium to enable a received broadcast signal or an external input signal from an external player to be stored in and reproduced from the hard disc according to a time-shift function in response to a user selection input. Such a time-shift function enables playback functions of pause, reverse play, fast or slow play, and the like for displaying a real-time broadcast signal or other, similarly received, video stream.

In displaying a broadcast signal input to a contemporary television broadcast receiver according to a time-shift function, however, the time-shifted display of a real-time broadcast signal prohibits a viewing by the user of the broadcast signal received in real time on the same channel, i.e., the real-time broadcast signal itself. That is, a playback operation according to the time-shift function, which utilizes the entire screen, inherently precludes any other simultaneous display to the user (viewer) for a monitoring or visual confirmation of the incoming broadcast signal and its progress status. Therefore, there is a need for a television receiver and display method thereof, which enables a real-time display of a television receiver input signal in the event that a time-shift function is being executed with respect to the input signal itself.

### SUMMARY OF THE INVENTION

Accordingly, the present invention is directed to a method of displaying a television receiver input signal according to a time-shift function and a television receiver using the same that substantially obviates one or more problems due to limitations and disadvantages of the related art.

An object of the present invention is to provide a method of displaying a television receiver input signal according to a time-shift function and a television receiver using the same, which, in reproducing a stored broadcast signal according to a time-shift function, enables a visual confirmation of a progress status of a real-time broadcast signal.

Another object of the present invention is to provide a method of displaying a television receiver input signal according to a time-shift function and a television receiver using the same, which enables a user to view an initially missed portion of a broadcast signal received in real time, while continuing to monitor the real-time broadcast signal, by displaying the real-time-received broadcast signal using a signal reproduced according to a time-shift function.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages in accordance with the purpose of the invention, as embodied and broadly described herein, a real-time broadcast signal, which is received while a stored video signal is being reproduced and displayed on a main screen area according to a time-shift function, is output like a picture-in-picture (PIP) displayed on an auxiliary screen area established as a prescribed area, e.g., a lower corner, of the main screen. Hence, a user (viewer) is able to monitor and verify a progress status of a real-time input signal, i.e., the PIP signal, during the display (viewing) of an input signal stored according to a time-shift function.

According to one aspect of the present invention, there is provided a method of displaying a television receiver input signal to a television receiver having a personal video recorder enabling a time-shift function. The method comprises receiving in real time an input signal of one channel of the television receiver; displaying on a screen the received input signal by storing the received input signal in a storage medium of the personal video recorder; determining whether a user requests the stored input signal to be output according to the time-shift function; and displaying, if it is determined that the user requests output of the stored input signal according to the time-shift function, the stored input signal on a first area of the screen and the real-time-received input signal on a second area of the screen.

According to another aspect of the present invention, there is provided a television receiver for receiving in real time an input signal of one channel. The television receiver comprises a personal video recorder enabling a time-shift function, the personal video recorder having a storage medium for storing the real-time-received input signal; a user interface for inputting, according to a user selection, a display mode selection signal based on the time-shift function; a display module for displaying on a screen the real-time input signal and an input signal stored in the personal video recorder according to a display mode; and a controller for determining whether a user requests the stored input signal to be output according to a time-shift function and for controlling the personal video recorder to output, if it is determined that the user requests output of the stored input signal according to the time-shift function, the stored input signal on a first area of the screen and the real-time-received input signal on a second area of the screen according to the display mode selection signal input by the user selection.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1A is a block diagram of a television receiver having a PVR according to the present invention;

FIG. 1B is a block diagram of a TS output circuit shown in FIG. 1A;

FIG. 2 is a flowchart of a method of storing and reproducing a broadcast signal according to the present invention; and

FIG. 3 is a diagram of an exemplary screen image displayed according to a second display mode, namely, where a stored broadcast signal is displayed on the main screen area according to the time-shift function and where a real-time broadcast signal is displayed on an auxiliary screen area.

### DETAILED DESCRIPTION OF THE INVENTION

Reference will now be made in detail to exemplary embodiments of the present invention, examples of which are illustrated in the accompanying drawings. Wherever possible, like reference designations will be used throughout the drawings to refer to the same or similar parts.

The present invention is applicable to video apparatuses capable of storing a video signal received from various input sources such as a tuner or a peripheral device. For example, a tuner 101 may be provided to receive a user-specified broadcast signal by tuning among available terrestrial or cable broadcast signals to thereby provide a digital input signal or an analog input signal, and a peripheral device such as a digital camcorder or DVD player may be connected to a television receiver via an external signal input port 102 for supplying a video signal to be stored. The video signal input to a video apparatus adopting the present invention is encoded to provide a data stream configured in a transport packet format, i.e., a plurality of serially arranged transport packets each comprising a header and a payload. While a digital broadcast signal as provided from a broadcast station is already configured in a transport stream format, an analog broadcast signal may be encoded locally. The video signal from a peripheral device may require similar encoding prior to storage as a transport stream (TS). The present invention is exemplified herein by describing a television receiver having a personal video recorder or PVR.

The television receiver according to the present invention includes a PVR for storing a real-time input signal in an internal storage medium according to a time-shift function; a user interface for providing a display mode signal and an audio mode signal according to the time-shift function by a user selection; a display module for displaying on a screen the real-time input signal and an input signal stored in the PVR; and a controller for generating control signals to display the input signal stored in the storage medium and the real-time input signal on first and second areas of the screen, respectively, according to the time-shift function in response to the display mode signal. An audio selector is provided for outputting either an audio signal of the stored input signal or an audio signal of the real-time input signal, according to an audio mode selected by the user.

The television receiver further includes an OSD generator for generating OSD data enabling a simultaneous display of a first progress bar and a second progress bar. The first progress bar, which may be displayed on either area of the screen, provides a visual representation of a progress status of the stored input signal being displayed on the first area. The second progress bar, which may likewise be displayed on either area of the screen, provides a visual representation a progress status of the real-time input signal being displayed on the second area. On the other hand, both progress bars may be displayed together, i.e., on one or the other area. Typically, each progress bar includes an indicator for indicating a current progress status of the correspondingly displayed signal. Under the control of the controller, the OSD generator is able to generate a single progress bar for jointly representing progress statuses of the stored and real-time input signals, for example, using first and second indicators for respectively indicating a current progress status of the correspondingly output (displayed) signal, and the single progress bar thus generated may be displayed on either one of the first and second areas as desired.

Meanwhile, the television receiver is able to accommodate reception of an analog signal as the television receiver input signal, by including and a digital signal receiving tuner (first tuner) for tuning and thereby receiving the real-time input signal and an analog signal receiving tuner (second tuner) for tuning and thereby receiving the real-time input signal. The television receiver may comprise the digital signal receiving tuner only.

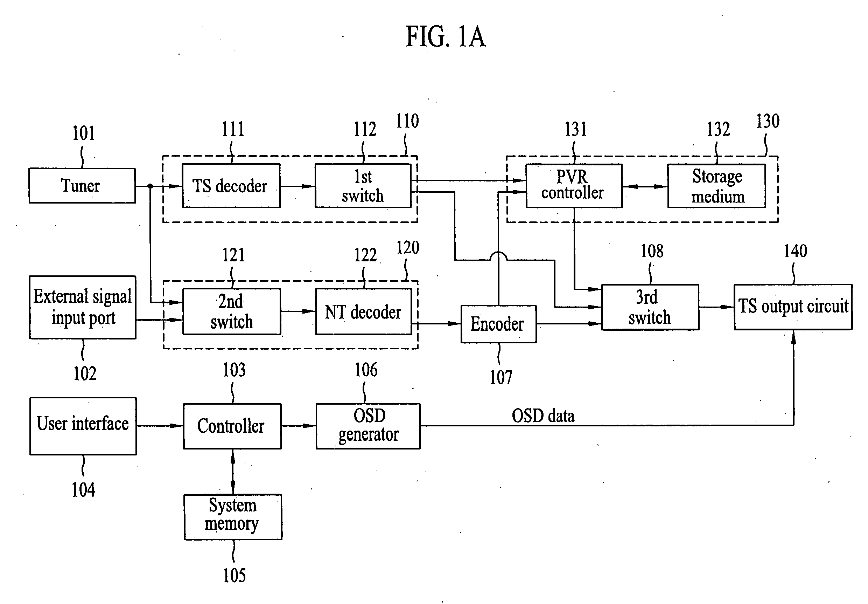

Referring to FIG. 1A, a television receiver according to the present invention may be configured to include a controller 103 for receiving a user selection signal via a user interface 104, e.g., a remote controller or local keypad, to control the system and to perform a time control function using a system memory 105 and for outputting on-screen display (OSD) data to an OSD generator 106 according to an operation of the time control function; a digital broadcast signal processor 110 for processing a digital input signal from the tuner 101, using a TS decoder 111 and a first switch 112; an analog broadcast signal processor 120 for processing an analog input signal from the tuner, using a second switch 121 and an NTSC (NT) decoder 122; a PVR unit 130, including a PVR controller 131 and a storage medium 132, for storing and reproducing the digital input signal or analog input signal (herein referred to as a broadcast signal), which may be a tuned signal input supplied from the tuner and encoded by an encoder 107 or a video signal input from the external signal input port 102 and similarly encoded; a third switch 108; and a TS output circuit 140 for outputting (displaying) a transport stream, e.g., broadcast signal, provided by the digital or analog broadcast signal processors or the PVR unit. Accordingly, as the present invention relates to a time-shift function enabled by storing a broadcast signal on one channel in real time, the following description considers for the sake of convenience that a broadcast signal is stored in the storage medium 132, though as it will be described, other input signals similarly received by the television receiver may be similarly stored.

The controller 103 communicates with each of the above elements via a bus (not shown) for providing control signals according to a user selection made via the user interface 104 and a program stored in the system memory 105, e.g., a general memory device different from the storage medium 132, which as a rule requires a significantly greater capacity than the system memory. Accordingly, the controller 103 performs an overall control of the television broadcast receiver, specifically including control of the displaying of a stored broadcast signal on a main area of a screen, according to the time-shift function, and the displaying of a real-time received broadcast signal on an auxiliary area of the screen. The controller 103 also controls the respective sizes of the main and auxiliary areas within the screen according to the user selection. Meanwhile, the system memory 105 stores various system information including a system program of the controller 103, and more particularly, information for a display mode and an audio mode, as selected by a user according to the present invention and input to the controller via the user interface 104. Thus, each of a display mode selection signal and an audio mode selection signal are input to the controller 103, based on a user selection input via the user interface 104.

The third switch 108 selects a signal to be processed by the TS output circuit 140. The selected signal may be the output of the digital signal processor 110, i.e., a received digital broadcast signal; the output of the encoder 107, i.e., a received signal such as an analog broadcast signal or peripheral device input that has been encoded into a transport stream format; or the output of the PVR unit 130, i.e., the stored transport stream that is being reproduced. That is, the third switch 108 has three inputs and one selectable output.

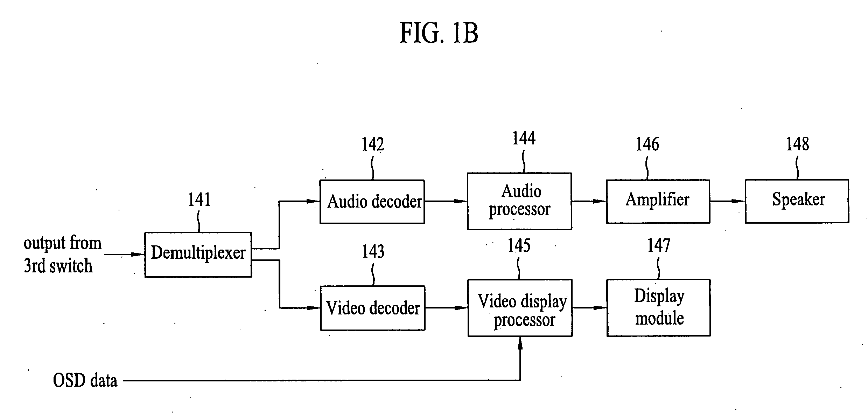

An example of the transport stream output unit 140 may be seen in FIG. 1B. Here, the TS output circuit 140 includes a demultiplexer 141 for outputting separated data streams, i.e., a video stream and an audio stream, an audio decoder 142, a video decoder 143, an audio processor 144, a video display processor 145, an amplifier 146, a display module 147, and a speaker 148. The audio decoder 142 and the video decoder 142 decode the data streams separately output from the demultiplexer 141 and respectively provide the decoded streams to the audio processor 144 and the video display processor 145. The audio processor 144, amplifier 146, and speaker 148 convert the decoded audio signal into an audible audio signal. The video display processor 145 processes the decoded video signal to be displayed by the display module 147, which may be a PDP module, an LCD module, or a flat CRT module, while overlaying (superposing) OSD data from the OSD generator 106, such that the OSD data is displayed together with the processed video signal. Accordingly, the video display processor 145, under the control of the controller 103 and receiving OSD data generated via the OSD generator 106, displays a video signal output from the PVR unit 130 on an entire area of the screen according to a first display mode and displays a video signal output from the PVR unit on the main area of the screen and a video signal provided by the digital or analog broadcast signal processor 110 or 120 on the auxiliary area of the screen. Meanwhile, the audio selector of the present invention may be realized by an inter-cooperation of the demultiplexer 141, audio decoder 142, audio processor 144, amplifier 146, and speaker 148 with an output of the controller 103.

The digital broadcast signal processor 110 receives a digital broadcast signal from the tuner 101. The TS decoder 111 of the digital broadcast signal processor 110 decodes the received signal, to output separated data streams to the first switch 112. The output data streams include a video stream, one or more audio streams, and a stream of additional information associated with the video and audio streams. According to a control of the controller 103, the first switch 112 selectively outputs the data streams to the PVR unit 130, to the TS output circuit 140, or to both.

The analog broadcast signal processor 120 receives an analog broadcast signal from the tuner 101 or a video signal input from the external signal input port 102. The second switch 121 of the analog broadcast signal processor 120 selects one of the two signals according to a control of the controller 103, to output the selected signal to the NT decoder 120, which decodes the received signal and outputs separated audio data and video data. This data is then encoded by the encoder 107 into a transport stream format, such as an MPEG signal, for storage the PVR unit 130 or processing by the TS output circuit 140.

The PVR unit 130 receives a digital broadcast signal from the digital broadcast signal processor 110 or a video signal input from the analog broadcast signal processor 120 and encoded by the encoder 107. Accordingly, the PVR controller 131 of the PVR unit 130 receives a transport stream and stores the received transport stream in the storage medium 132 under the control of the controller 103.

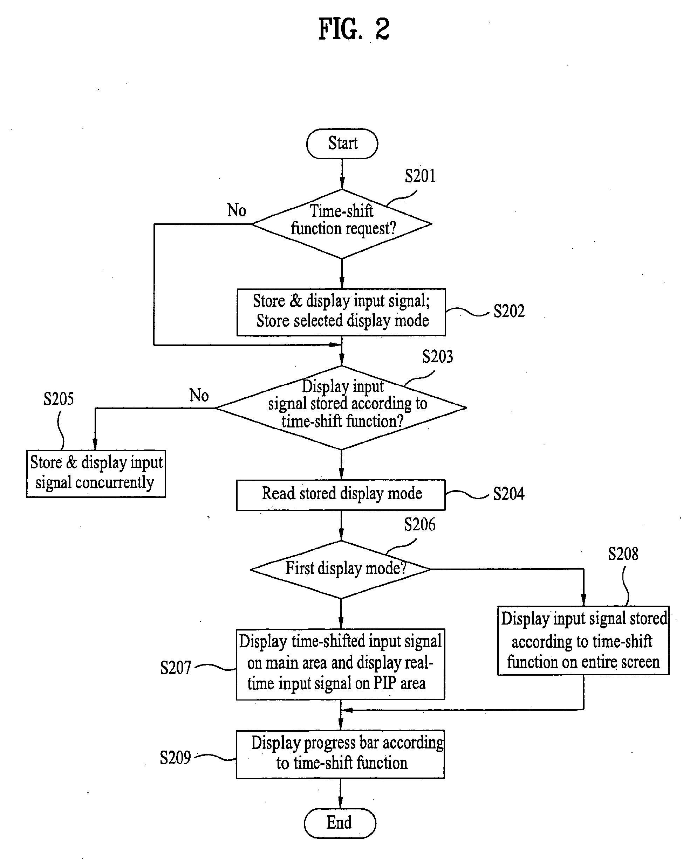

FIG. 2 illustrates a method of storing and reproducing (displaying) a broadcast signal according to the present invention. In doing so, a television broadcast receiver adopting a personal video recorder enabling a time-shift function receives and displays an input signal.

Specifically, the method according to the present invention includes steps of displaying on a screen an input signal of one channel, by storing the input signal in a storage medium according to the time-shift function; checking whether a user requests the input signal of the channel stored in the stored medium to be output according to the time-shift function; and, if the stored input signal according to the time-shift function is requested to be output, displaying the input signal stored in the storage medium on a first area of the screen and a real-time input signal of the channel on a second area of the screen according to a display mode selected by the user.

In the present invention, the first and second areas may each be predetermined areas and may correspond to one or more areas set in accordance with a user-selected display mode, for example, a first display mode and a second display mode, with the audio signal of the real-time or stored input signal of the channel being output according to an audio mode, typically selected in accordance with the display mode. Here, the first area may correspond to an area substantially coinciding with the entire display area of the screen and the second area may correspond to a null area of the screen, where the size of the null area is effectively zero. On the other hand, the first area may correspond to a main area of the screen, i.e., the majority of the screen's available display area, and the second area may correspond to an auxiliary area of the screen, such as a PIP display area determined according to a PIP display function. In addition, the first and second areas may, by user selection, be interchanged in their designations of screen area. That is, the first and second areas are variable according to a selection made by the user. Meanwhile, the first and second progress bars may be respectively displayed on their corresponding areas, or either one of the first and second areas may be used to display the first and second progress bars together or to display the single progress bar alone.

Referring to FIG. 2, the controller 103 determines whether a user requests, via the user interface 104, a storage of an input broadcast signal according to a time-shift function (S201). If so, the controller 103 stores the input signal in the storage medium 132 and stores in the system memory 105 identifying information of the input signal, including a desired display mode; and the stored input broadcast signal is displayed (S202).

Based on the display mode selected, the real-time input signal and the stored input signal is respectively displayed under the control of the controller 103, with each signal occupying a predetermined portion of the screen and being displayed at a predetermined size, e.g., height-to-width ratio. For example, the selected display mode may be one of a first display mode and a second display mode. In the first display mode, the stored broadcast input signal may be output according to an execution of the time-shift function, to be displayed on the entire display area of the screen. In the second display mode, the stored broadcast input signal may be displayed on a main area of the screen according to the time-shift function, while the real-time-received input broadcast signal may be displayed on an auxiliary area of the screen, such as a PIP area. A user-defined display mode control signal is input to the controller 103 via the user interface 104, and the display mode control signal is stored in the system memory 105, thereby selecting the first or second display mode.

After storing the input signal according to the time-shift function and the selected display mode in the storage medium 132 and system memory 105, respectively, the controller 103 determines whether the user requests to display the stored broadcast signal according to a time-shift function (S203). For example, the controller 103 may check for a user request for executing a time-shift function such as a pause of a real-time broadcast, a playback of the stored broadcast signal, or a speed-varied (e.g., slow-motion) reproduction of the stored broadcast signal. If the user requests the time-shift function to be executed, the controller 103 reads information for the time-shift function stored in the system memory 105, including information identifying the display mode (S204), which is also stored in the system memory; otherwise, a concurrent storage and display of the received input signal continues (S205). Then, the controller 103 determines the display mode according to the time-shift function based on the display mode information read out from the system memory 105, which may indicate the first display mode or the second display mode. For example, the controller 103 may determine if the display mode corresponds to the first display mode (S206).

If the stored display mode is the first display mode (S207), the controller 103 controls the PVR unit 130, third switch 108, and TS output circuit 140, to output only the stored broadcast signal according to the time-shift function, to be displayed over the entire the screen of the screen of the display module 147, with no display of the real-time broadcast signal. On the other hand, if the stored display mode is the second display mode (S208), the controller 103 controls the PVR unit 130, third switch 108, and TS output circuit 140, to output the broadcast signal according to the time-shift function, to be displayed on a main screen area and to output the real-time broadcast signal to an auxiliary (PIP) area of the screen. Here, the time-shifted broadcast signal and the real-time broadcast signal may be based on another input signal, such as an external input signal supplied from an alternative video source connected to the external signal input port 102. In any case, OSD data for forming a progress bar with indicator may be generated and displayed in correspondence with the determined display mode according to the time-shift function (S209). At the same time, a user selection of the audio mode, made via the user interface 104, results in an input of an audio mode select signal to the controller 103, which controls the TS output circuit 140 to output via the speaker 148 the audio signal of the real-time or stored broadcast signal, accordingly.

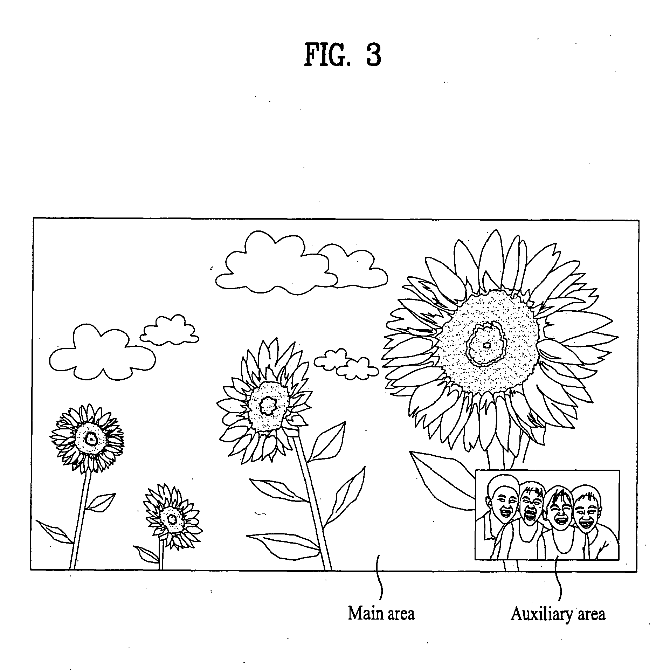

FIG. 3 illustrates an exemplary screen image according to the second display mode, but without either progress bar (omitted from the drawings) of the embodiment. That is, a stored broadcast signal is displayed on the main area of the screen according to the time-shift function, and the real-time broadcast signal is displayed on the auxiliary area of the screen. In other words, a broadcast signal is read from the storage medium 132 according to the time-shift function and is displayed on the main screen area while a broadcast signal received in real time is displayed on the auxiliary screen area. The term "broadcast signal" (i.e., a television receiver's "input signal") is used to signify a broadcast signal received by the television receiver via one input channel, such as the tuner 101, but it is apparent that the present invention may be applied for an input signal reproduced from another video source, such as a DVD player or other peripheral device.

While thus displaying the stored broadcast signal according to the time-shift function, the controller 103 generates, via the OSD generator 106, OSD data indicating progress statuses of the broadcast signal stored according to the time-shift function and the real-time broadcast signal. The generated OSD data is provided to the video display processor 145, where the OSD data is mixed with one or both of the stored and real-time broadcast signals for output to the display module 147, that is, to be displayed together with the video signal. Therefore, the stored broadcast signal and the corresponding progress bar(s) are simultaneously displayed according to the time-shift function.

The present invention may include a computer-readable medium storing a set of program commands for executing operations implemented by a computer. The computer-readable medium may include the program commands, a data file, a data structure, and other computer-program-related data. The medium and the stored program commands are configured in accordance with the present invention and may be specifically designed for the above-described embodiment or may comprise a device and program combination known to those skilled in the field of computer software.

According to the present invention, a simultaneous display of a real-time-received broadcast signal and a time-shifted version of the received broadcast signal is enabled. That is, by displaying on the auxiliary area or PIP area (second area) the real-time broadcast signal while displaying on the main area (first area) the stored broadcast signal, which is being displayed according to the time-shift function, the progress status of the real-time broadcast signal can be visually confirmed while the stored broadcast signal is being displayed according to the time-shift function.

It will be apparent to those skilled in the art that various modifications can be made in the present invention without departing from the spirit or scope of the invention. Thus, it is intended that the present invention covers such modifications provided they come within the scope of the appended claims and their equivalents.

## Claims

1. A method of displaying a television receiver input signal to a television receiver having a personal video recorder enabling a time-shift function, the method comprising:
receiving in real time an input signal of one channel of the television receiver;
displaying on a screen the received input signal by storing the received input signal in a storage medium of the personal video recorder;
determining whether a user requests the stored input signal to be output according to the time-shift function; and
displaying, if it is determined that the user requests output of the stored input signal according to the time-shift function, the stored input signal on a first area of the screen and the real-time-received input signal on a second area of the screen.

2. The method of claim 1, further comprising:
storing in a system memory information indicative of a display mode.

3. The method of claim 2, wherein the display mode is determined by a user selection.

4. The method of claim 3, wherein the first and second areas of the screen are determined based on the user selection.

5. The method of claim 1, wherein the first area corresponds to an entire display area of the screen and wherein the second area corresponds to a null area of the screen.

6. The method of claim 5, wherein the size of the null area of the screen is zero.

7. The method of claim 1, wherein the first area corresponds to a main area of the screen and wherein the second area corresponds to an auxiliary area of the screen.

8. The method of claim 7, wherein the main area of the screen coincides with a majority of the screen's available display area and wherein the auxiliary area of the screen is determined according to a PIP display function of the television receiver.

9. The method of claim 1, wherein the first area corresponds to an auxiliary area of the screen and wherein the second area corresponds to a main area of the screen.

10. The method of claim 9, wherein the main area of the screen coincides with a majority of the screen's available display area and wherein the auxiliary area of the screen is determined according to a PIP display function of the television receiver.

11. The method of claim 1, wherein each of the first area and second area has a size set according to a selection made by the user.

12. The method of claim 1, wherein each of the first area and second area occupies a portion of the screen according to a selection made by the user.

13. The method of claim 1, further comprising:
outputting an audio signal of the channel according to an audio mode selected by the user.

14. The method of claim 13, wherein the output audio signal corresponds to one of the stored input signal and the real-time-received input signal.

15. The method of claim 1, further comprising:
generating on-screen display data indicative of a progress status of at least one of the stored input signal displayed on one of the first and second areas and the real-time-received input signal displayed on the other of the first and second areas, to enable a display of a progress bar including an indicator for indicating a current progress status of the correspondingly displayed signal.

16. The method of claim 15, wherein the displayed first progress bar is displayed in at least one of the first and second areas.

17. A television receiver for receiving in real time an input signal of one channel, the television receiver comprising:
a personal video recorder enabling a time-shift function, said personal video recorder having a storage medium for storing the real-time-received input signal;
a user interface for inputting, according to a user selection, a display mode selection signal based on the time-shift function;
a display module for displaying on a screen the real-time input signal and an input signal stored in said personal video recorder according to a display mode; and
a controller for determining whether a user requests the stored input signal to be output according to a time-shift function and for controlling said personal video recorder to output, if it is determined that the user requests output of the stored input signal according to the time-shift function, the stored input signal on a first area of the screen and the real-time-received input signal on a second area of the screen according to the display mode selection signal input by the user selection.

18. The television receiver of claim 17, further comprising:
a system memory for storing information indicative of the display mode, the display mode determined by the user selection.

19. The television receiver of claim 17, wherein the first and second areas of the screen are determined based on the user selection.

20. The television receiver of claim 17, wherein the first area corresponds to an entire display area of the screen and wherein the second area corresponds to a null area of the screen, the null area of the screen having a size of zero.

21. The television receiver of claim 17, wherein the first area corresponds to a main area of the screen and wherein the second area corresponds to an auxiliary area of the screen.

22. The television receiver of claim 21, wherein the main area of the screen coincides with a majority of the screen's available display area and wherein the auxiliary area of the screen is determined according to a PIP display function of the television receiver.

23. The television receiver of claim 17, wherein the first area corresponds to an auxiliary area of the screen and wherein the second area corresponds to a main area of the screen.

24. The television receiver of claim 23, wherein the main area of the screen coincides with a majority of the screen's available display area and wherein the auxiliary area of the screen is determined according to a PIP display function of the television receiver.

25. The television receiver of claim 17, wherein each of the first area and second area has a size for occupying a predetermined portion of the screen according to the display mode selection signal.

26. The television receiver of claim 17, further comprising:
an on-screen display data (OSD) for generating OSD data indicative of a progress status of at least one of the stored input signal displayed on one of the first and second areas and the real-time-received input signal displayed on the other of the first and second areas, to enable a display of a progress bar including an indicator for indicating a current progress status of the correspondingly displayed signal.

27. The television receiver of claim 26, wherein the displayed first progress bar is displayed in at least one of the first and second areas.

28. The television receiver of claim 17, further comprising:
an audio selector for outputting one of an audio signal of the stored input signal and an audio signal of the real-time input signal according to an audio mode selection signal for selecting an audio mode, the audio mode selection signal being input to said controller according to a user selection made based on the display mode.

29. The television receiver of claim 17, further comprising:
a tuner for receiving the television receiver input signal.

30. The television receiver of claim 29, said tuner comprising:
a first tuner for receiving in real time a digital signal input as the television receiver input signal; and
a second tuner for receiving in real time an analog signal input as the television receiver input signal.

31. The television receiver of claim 30, wherein the analog signal input to said second tuner is an external input signal received in real time from a peripheral device for supplying said personal video recorder with the television receiver input signal.
